# EUROPÄISCHE PATENTSCHRIFT

(11) **EP 0 764 130 B1**
(45) Veröffentlichungstag und Bekanntmachung des Hinweises auf die Patenterteilung: **02.06.1999**
(21) Anmeldenummer: 96905588.8
(22) Anmeldetag: 25.03.1996
(51) Int. Cl.: B65G 65/46

(54) **VORRICHTUNG ZUM KONTINUIERLICHEN FÖRDERN VON SCHWERFLIESSENDEN MATERIALIEN**
DEVICE FOR CONTINUOUSLY CONVEYING MATERIALS WHICH DO NOT FLOW EASILY
DISPOSITIF DE TRANSPORT EN CONTINU DE MATERIAUX PEU COULANTS

(30) Priorität: 28.04.1995 AT 739/95
(43) Veröffentlichungstag der Anmeldung: 26.03.1997
(73) Patentinhaber: LENZING AKTIENGESELLSCHAFT, 4860 Lenzing (AT)
(72) Erfinder: ZIKELI, Stefan, A-4844 Regau (AT); ECKER, Friedrich, A-4850 Timelkam (AT); MÖDERL, Ulrich, A-4860 Lenzing (AT)
(74) Vertreter: Schwarz, Albin, Dr. Kopecky & Schwarz Patentanwälte
(86) Internationale Anmeldenummer: AT9600058
(87) Internationale Veröffentlichungsnummer: WO9633935

(56) Entgegenhaltungen:
- DE-A- 2 009 510
- DE-A- 2 618 911
- DE-A- 3 146 631
- DE-A- 3 324 993
- DE-A- 3 819 861

## Beschreibung

Die Erfindung betrifft eine Vorrichtung zum kontinuierlichen Fördern von schwerfließenden, teilchenförmigen Materialien, insbesondere zerkleinerte Cellulose.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern, Folien und anderen Formkörpern, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 533 070 beschrieben. Ein Verfahren zur Herstellung formbarer Celluloselösungen ist z.B. aus der EP-A - 0 356 419 bekannt. Die Herstellung cellulosischer Formkörper unter Anwendung tertiärer Aminoxide wird allgemein als Aminoxidverfahren bezeichnet.

In der EP-A - 0 356 419 ist ein Aminoxidverfahren zur Herstellung spinnbarer Celluloselösungen beschrieben, welches als Ausgangsmaterial u.a. eine Suspension von Cellulose in flüssigem, wäßrigem N-Methylmorpholin-N-oxid (NMMO) verwendet.

Dieses Verfahren besteht darin, daß die Suspension in einem Dünnschichtbehandlungsapparat einstufig und kontinuierlich in eine formbare Lösung übergeführt wird. Die formbare Lösung wird schließlich in einem Formwerkzeug, z.B einer Spinndüse, zu Filamenten versponnen, die durch ein Fällbad geführt werden.

Aus der WO 94/28217 ist ein Verfahren zur Herstellung einer Vormischung auf Basis von Cellulose bekannt, aus welcher eine formbare Celluloselösung hergestellt werden kann. Gemäß diesem Verfahren wird zerkleinerte Cellulose und eine Aminoxidlösung in eine horizontal gelagerte, zylindrische Mischkammer eingebracht, welche einen Rotor mit axial beabstandeten Rührelementen aufweist. Die Mischung wird in der Mischkammer gerührt, indem der Rotor mit einer Geschwindigkeit von 40 bis 80 Umdrehungen pro Minute gedreht wird. Vorzugsweise wird die Mischung in der Mischkammer auf einer Temperatur oberhalb 65°C gehalten.

Als Ausgangsmaterial für die Herstellung der formbaren Celluloselösung dient, wie oben erwähnt, eine Suspension von Cellulose im wäßrigen tertiären Aminoxid. Diese Suspension wird hergestellt, indem zerkleinerte Cellulose in die wäßrige Aminoxidlösung eingebracht wird. Dies bedeutet, daß eine Fabrik, in welcher das Aminoxidverfahren großtechnisch durchgeführt wird, Vorratsbehälter für die zerkleinerte Cellulose besitzen muß. Diese Vorratsbehälter müssen eine entsprechend große Aufnahmekapazität für die zerkleinerte Cellulose aufweisen.

Aus der DE-A - 2 009 510 ist eine Silo-Austragvorrichtung mit einem am Siloboden angeordneten kanalartigen Schneckentrog bekannt, in dem eine Förderschnecke zum Ausbringen des Silogutes drehbar gelagert ist, wobei das Fördervolumen in Förderrichtung zunimmt. Oberhalb des Schneckentroges und unmittelbar oberhalb der Bodenwand des zylindrischen Silos ist ein zylindrischer, drehbar gelagerter Rotor mit daran befestigten Federarmen angeordnet.

Da das gesamte Aminoxidverfahren zweckmäßigerweise kontinuierlich durchgeführt wird, sollte die zerkleinerte Cellulose dem Vorratsbehälter kontinuierlich entnommen werden. Dies ist jedoch nicht einfach zu erreichen, da einerseits die Austragseinrichtung, z.B. eine Austragsschnecke, mit der das Material dem Vorratsbehälter entnommen wird, aufgrund der Abmessungen des großen Vorratsbehälters ebenfalls eine entsprechende Größe besitzen und damit eine entsprechend hohe Förderleistung aufweisen muß. Andererseits werden pro Zeiteinheit stets nur relativ kleine Mengen zur Suspensionsherstellung benötigt, die eine große Austragsschnecke nicht kontinuierlich und gleichzeitig genau dosiert liefern kann.

Die Erfindung stellt sich daher die Aufgabe, eine Vorrichtung zur Verfügung zu stellen, mit welcher zerkleinertes, schwerfließendes Material aus einem Vorratsbehälter mit großem Fassungsvermögen kontinuierlich in relativ kleinen Mengen entnommen und weitergefördert werden kann.

Die erfindungsgemäße Vorrichtung zum kontinuierlichen Fördern von zerkleinerten, schwerfließenden Materialien, insbesondere zerkleinerten cellulosischen Materialien, umfaßt
(A) einen Aufnahmebehälter für das zu fördernde, zerkleinerte Material, welcher Aufnahmebehälter eine Eintragsöffnung und eine Austragsöffnung aufweist und in welchen das zerkleinerte Material befördert wird,
(B) mindestens einen Räumarm, der im Aufnahmebehälter vorgesehen und an einem Träger, der bewegbar gelagert ist, angebracht ist und durch seine Bewegung das im Aufnahmebehälter befindliche Material zur Austragsöffnung befördert,
(C) einen Austragsschacht, der mit der Austragsöffnung in Verbindung steht und der das vom Räumarm zur Austragsöffnung beförderte Material aufnimmt, und
(D) ein Mittel zum kontinuierlichen Austragen von zerkleinertem Material aus dem Austragsschacht, und ist dadurch gekennzeichnet, daß der Träger kegelförmig geformt ist.

Es hat sich gezeigt, daß es mit der erfindungsgemäßen Vorrichtung auf einfache Weise gelingt, zerkleinertes schwerfließendes Material von einem Vorratsbehälter mit großem Fassungsvermögen zu entnehmen und kontinuierlich in relativ kleineren Mengen einer weiteren Verarbeitung zuzuführen.

Die erfindungsgemäße Vorrichtung eignet sich inbesondere sehr gut, zerkleinertes cellulosisches Material aus einem Vorratsbehälter mit großem Fassungsvermögen zu entnehmen und in relativ kleinen Mengen kontinuierlich einer weiteren Verarbeitung zuzuführen.

Der kegelförmig geformte Träger wirkt einer Brückenbildung des zerkleinerten Materials, die andernfalls insbesondere im Austragsbereich des Aufnahmebehälters auftreten kann, entgegen.

Eine bevorzugte Ausgestaltung der erfindungsgemäßen Vorrichtung besteht darin, daß der Aufnahmebehälter zur Eintragsöffnung hin verjüngt ist, wobei der Winkel α, um welchen der Aufnahmebehälter zur Eintragsöffnung verjüngt ist, vorzugsweise einen Wert aufweist, der zwischen 2° und 30° liegt. Bei einer erfindungsgemäßen Vorrichtung, die zum kontinuierlichen Fördern von zerkleinerter Cellulose verwendet werden soll, weist der Winkel α bevorzugt einen Wert auf, der zwischen 5° und 15° liegt. Diese Ausgestaltung wirkt einer Brückenbildung des zerkleinerten Materials im Aufnahmebehälter besonders gut entgegen.

Zweckmäßigerweise weist die erfindungsgemäße Vorrichtung ferner auf:
(E) ein Mittel zum Einbringen von zerkleinertem Material in den Behälter.

Als Mittel zum Einbringen und Austragen des zerkleinerten Materials eignen sich beispielsweise Förderschnecken, die Förderleistungen aufweisen, deren Verhältnis einen Wert zwischen 10 und 25 (Einbringen:Austragen) besitzt.

Die erfindungsgemäße Vorrichtung kann auch mit einer Wägevorrichtung verbunden sein. Diese Ausgestaltung der erfindungsgemäßen Vorrichtung gestattet es, den Massefluß des zerkleinerten Materials zu kontrollieren und somit beispielsweise festzustellen, ob mehr Material eingebracht als ausgetragen wird und umgekehrt.

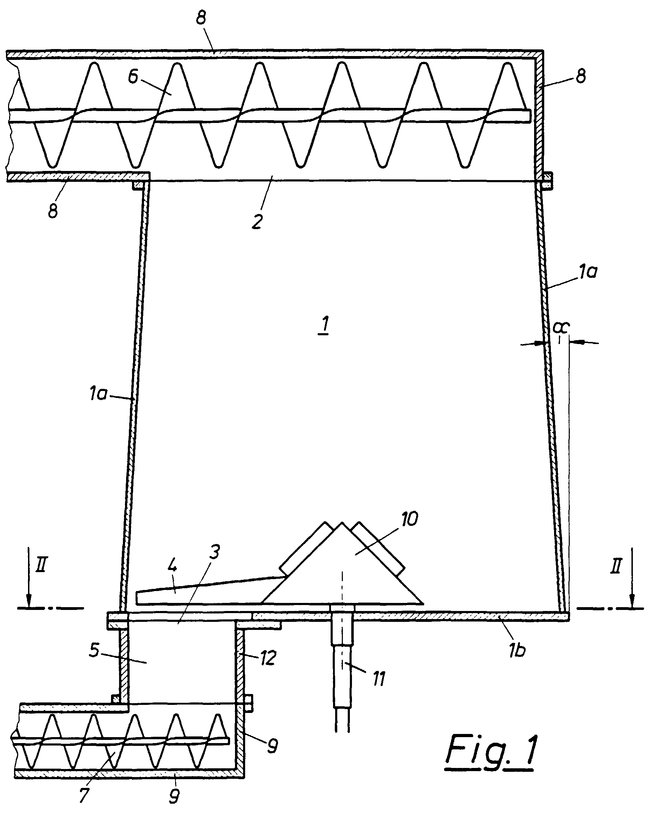

Eine Ausgestaltung der vorliegenden Erfindung wird an Hand der beigefügten Zeichnung, die aus den Figuren 1, 2, 3a und 3b besteht, noch näher beschrieben.

Die Figur 1 zeigt einen Schnitt durch eine bevorzugte Ausgestaltung der erfindungsgemäßen Vorrichtung. Mit der Bezugsziffer 1 ist ein Behälter bezeichnet, der kegelstumpfförmig gestaltet ist und eine Wand 1a und einen Bodenteil 1b aufweist. Die Wand 1a ist in Richtung der Eintragsöffnung 2 um den Winkel α geneigt. An der Eintragsöffnung 2 ist eine Eintragsschnecke 6 mit Gehäuse 8 an der Wand 1a des Behälters 1 angeflanscht.

Im Bodenteil 1b des Behälters 1 ist die Austragsöffnung 3 vorgesehen, die in den Austragsschacht 5 übergeht. Am unteren Ende des Austragsschachtes 5 ist eine Austragsschnecke 7 vorgesehen, die mit ihrem Gehäuse 9 an der Wand 12 des Austragsschachtes 5 angeflanscht ist.

Im Behälter 1 ist ein Räumarm 4 vorgesehen, der an einem im Bodenteil 1b drehbar gelagerten Träger 10 angebracht ist. Der Träger 10 wird über eine Achse 11 in Rotation versetzt. Der Antriebsmotor für den Träger 10 ist nicht gezeigt.

Die Figur 2 zeigt einen Schnitt entlang der Linie II-II der Figur 1. Es sind der kreisförmige Bodenteil 1b des Behälters 1 und die Austragsöffnung 3 sowie die Achse 11 des Trägers 10 (nicht dargestellt) zu sehen.

Die Figur 3b zeigt den Träger 10 mit drei angebrachten Räumarmen 4 aus der Sicht von oben, d.h. von der Eintragsöffnung 2 des Behälters 1. Am Träger 10 sind ferner Rührelemente 13 vorgesehen.

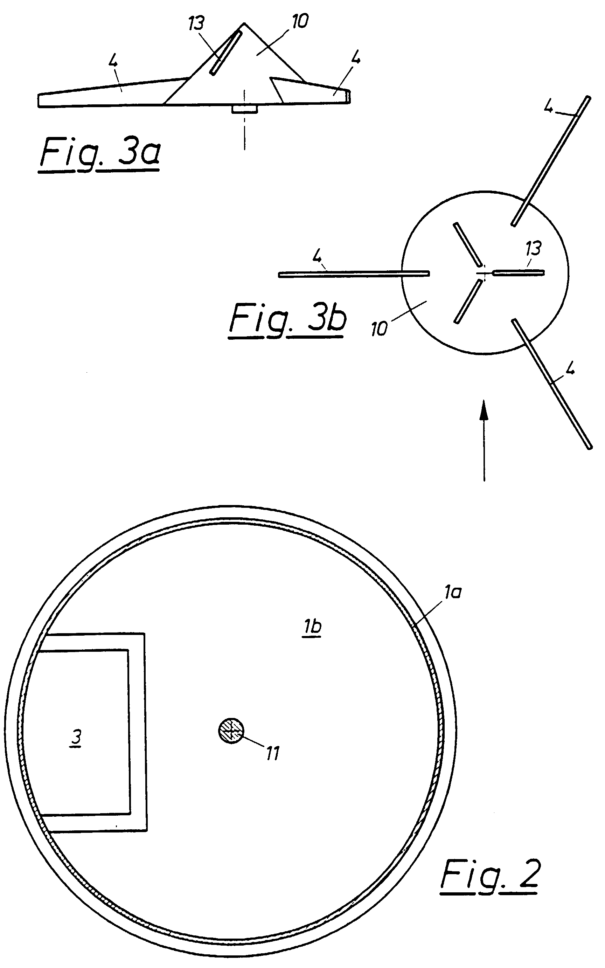

In der Figur 3a ist der in Figur 3 dargestellte Träger 10 aus einer Blickrichtung dargestellt, die in der Figur 3b mit Pfeil angegeben ist.

Die Funktion der erfindungsgemäßen Vorrichtung wird im folgenden an der Figur 1 beschrieben:

Die Eintragsschnecke 6 ragt in einen Vorratsbehälter, in welchem sich beispielsweise zerkleinerte Cellulose mit einer Teilchengröße von maximal 4 mm befindet, und fördert zerkleinerte Cellulose diskontinuierlich in den Behälter 1, bis dieser z.B. zu zwei Drittel gefüllt ist. Durch Rotation des Trägers 10 mit den daran angebrachten Räumarmen 4 wird sichergestellt, daß das im Behälter 10 befindliche Material in den Austragsschacht 5 nachgefördert wird.

Das im Austragsschacht 5 befindliche Material wird von der Austragsschnecke 7 kontinuierlich abgegeben und einer weiteren Verwendung, z.B. der kontinuierlichen Herstellung der Cellulosesuspension, zugeführt.

Sobald der Füllstand des zerkleinerten Materials im Behälter 1 unter einen vorgegebenen Wert fällt, wird von der Eintragsschnecke 6 Material nachgeliefert und der Behälter 1 wieder auf den Sollwert gefüllt.

Wie oben bereits erwähnt wurde, kann die erfindungsgemäße Vorrichtung mit einer Wägevorrichtung verbunden sein, um den Massefluß des zerkleinerten Materials zu bestimmen. Zweckmäßigerweise steht die Vorrichtung dann auf einer Waage und ist die Behälterwand 1a mit dem Gehäuse 8 der Eintragsschnecke 6 nicht starr verbunden, sodaß sich der Behälter 1 absenken kann, wenn mehr Material von der Eintragsschnecke 6 eingetragen wird, als von der Austragsschnecke 7 ausgetragen wird. Dazu ist es selbstverständlich erforderlich, daß auch die weitere Verbindung zwischen der Austragsschnecke 7 und jener Vorrichtung, in welche die Austragsschnecke 7 Material fördert (nicht gezeigt), ebenfalls nicht starr ist und die Bewegungen des Behälters 1, die aufgrund des unterschiedlichen Füllstandes herrühren, mitmachen kann.

Durch die Rotation des Trägers 10 und durch die konische Gestaltung der Behälterwand 1a wird wirksam verhindert, daß sich im Behälter 10 eine Materialbrücke bildet, die ein Nachfließen von Material in den Austragsschacht 5 und damit eine kontinuierliche Abgabe durch die Austragsschnecke 7 verhindern würde.

## Patentansprüche

1. Vorrichtung zum kontinuierlichen Fördern von zerkleinerten, schwerfließenden Materialien, insbesondere zerkleinerten cellulosischen Materialien, umfassend
(A) einen Aufnahmebehälter (1) für das zu fördernde, zerkleinerte Material, welcher Aufnahmebehälter (1) eine Eintragsöffnung (2) und eine Austragsöffnung (3) aufweist, und in welchen das zerkleinerte Material befördert wird,
(B) mindestens einen Räumarm (4), der im Aufnahmebehälter (1) vorgesehen und an einem Träger (10), der bewegbar gelagert ist, angebracht ist und durch seine Bewegung das im Aufnahmebehälter (1) befindliche Material zur Austragsöffnung (3) befördert,
(C) einen Austragsschacht (5), der mit der Austragsöffnung (3) in Verbindung steht und der das vom Räumarm (4) zur Austragsöffnung (3) beförderte Material aufnimmt, und
(D) ein Mittel (7) zum kontinuierlichen Austragen von zerkleinertem Material aus dem Austragsschacht (5),
dadurch gekennzeichnet, daß der Träger (10) kegelförmig geformt ist.

2. Vorrichtung nach Anspruch 1, dadurch gekennzeichnet, daß der Aufnahmebehälter (1) zur Eintragsöffnung (2) hin verjüngt ist.

3. Vorrichtung nach Anspruch 2, dadurch gekennzeichnet, daß der Winkel α, um welchen der Aufnahmebehälter (1) zur Eintragsöffnung (2) verjüngt ist, einen Wert aufweist, der zwischen 2° und 30° liegt.

4. Vorrichtung nach Anspruch 3 zum kontinuierlichen Fördern von zerkleinerter Cellulose, dadurch gekennzeichnet, daß der Winkel α einen Wert aufweist, der zwischen 5° und 15° liegt.

5. Vorrichtung nach einem der Ansprüche 1 bis 4, welche ferner gekennzeichnet ist durch
(E) ein Mittel (6) zum Einbringen von zerkleinertem Material in den Behälter (1).

6. Vorrichtung nach Anspruch 5, dadurch gekennzeichnet, daß Mittel (6, 7) zum Einbringen und zum Austragen von zerkleinertem Material vorgesehen sind, welche Förderleistungen aufweisen, deren Verhältnis Einbringen:Ausbringen einen Wert zwischen 10 und 25 besitzt.

## Claims

1. A device for the continuous delivery of shredded materials exhibiting low flowability, particularly shredded cellulose materials, comprising
(A) a receptacle (1) for the shredded material to be delivered, said receptacle (1) having a inlet (2) and an outlet (3), and said shredded material being delivered to said receptacle,
(B) at least one discharge arm (4) provided in said receptacle (1) and attached to a movably mounted support (10), which discharge arm by its movement delivers the material present in said receptacle (1) towards said outlet (3),
(C) an outlet pit (5) joined to said outlet (3) and receiving the material delivered by said discharge arm (4) to said outlet (3) and
(D) a means (7) for the continuous discharge of shredded material from said outlet pit (5),
characterized in that the support (10) is cone-shaped.

2. A device according to Claim 1, characterized in that said receptacle (1) is tapered towards said inlet (2).

3. A device according to Claim 2, characterized in that the angle α, whereby said receptacle (1) is tapered towards the inlet (2), has a value of from 2° to 30°.

4. A device according to Claim 3 for the continuous delivery of shredded cellulose, characterized in that the angle α has a value of from 5° to 15°.

5. A device according to one of the Claims 1 to 4, furthermore characterized in that there is
(E) a means (6) for charging shredded material into the receptacle (1).

6. A device according to Claim 5, characterized in that means (6, 7) for charging and discharging shredded material having delivery capacities exhibiting a charging : discharging ratio of a value of from 10 to 25 are provided.

## Revendications

1. Dispositif de transport continu de matières peu coulantes, fragmentées, en particulier de matières cellulosiques fragmentées, comprenant
(A) un récipient de réception (1) pour la matière fragmentée à transporter, ce récipient de réception (1) présentant une ouverture d'entrée (2) et une ouverture de déchargement (3) tandis que la matière fragmentée est avancée dans celui-ci,
(B) au moins un bras de déblaiement (4) qui est prévu dans le récipient de réception (1) et est agencé sur un support (10) qui est supporté de manière amovible, et qui par son mouvement avance la matière située dans le récipient de réception (1) vers l'ouverture de déchargement (3),
(C) un puits de déchargement (5), qui est en communication avec l'ouverture de déchargement (3) et qui reçoit la matière avancée par le bras de déblaiement (4) vers l'ouverture de déchargement (3), et
(D) un moyen (7) pour décharger de manière continue de la matière fragmentée à partir du puits de déchargement (5),
caractérisé en ce que le support (10) est façonné avec une forme conique.

2. Dispositif suivant la revendication 1, caractérisé en ce que le récipient de réception (1) s'amincit vers l'ouverture d'entrée (2).

3. Dispositif suivant la revendication 2, caractérisé en ce que l'angle α, suivant lequel le récipient de réception (1) s'amincit vers l'ouverture d'entrée (2), présente une valeur qui est située entre 2° et 30°.

4. Dispositif suivant la revendication 3, pour transporter de manière continue de la cellulose fragmentée, caractérisé en ce que l'angle α présente une valeur qui est située entre 5° et 15°.

5. Dispositif suivant l'une des revendications 1 à 4, caractérisé en outre par
(E) un moyen (6) pour introduire de la matière fragmentée dans le récipient (1).

6. Dispositif suivant la revendication 5, caractérisé en ce que des moyens (6, 7) pour introduire et décharger de la matière fragmentée sont prévus, et présentent des puissances de transport dont le rapport introduction/déchargement présente une valeur comprise entre 10 et 25.
